# EUROPÄISCHE PATENTANMELDUNG

(11) **EP 0 597 172 A1**
(43) Veröffentlichungstag der Anmeldung: **18.05.1994**
(21) Anmeldenummer: 93106866.2
(22) Anmeldetag: 28.04.1993
(51) Int. Cl.: H04B 3/54, H02J 13/00

(54) **Einrichtung zur Datenübertragung über das Stromversorgungsnetz**

(30) Priorität: 28.10.1992 DE 4236310
(71) Anmelder: Stewing Nachrichtentechnik GmbH & Co. KG Berlin, D-13599 Berlin (DE)
(72) Erfinder: Berger, Dieter, O-1000 Berlin 41 (DE); Müller, Peter, O-1000 Berlin 26 (DE); Triebs, Ottomar, O-1000 Berlin 15 (DE)
(74) Vertreter: Honke, Manfred, Dr.-Ing.

(57) **Zusammenfassung**

Es handelt sich um eine Einrichtung zur Datenübertragung über das Stromversorgungsnetz (1), mit einem Sender (2) und einem Empfänger (3), wobei der Sender (2) mit einem Microcomputer (6) und mit einer dem Microcomputer nachgeschalteten PLL-Schaltung (7) ausgerüstet ist. Die PLL-Schaltung (7) und der Microcomputer (6) sind über eine Endverstärkerstufe (8) unter Zwischenschaltung einer Ein/Auskoppeleinrichtung (4) an das Stromversorgungsnetz (1) angeschlossen. Mit dem gewählten Sender/Empfängerkonzept wird jedes Datentelegramm nacheinander in drei oder mehreren Frequenzbereichen gesendet. Dadurch lassen sich Störungen selbst im Wege der Manipulation eliminieren. Denn für die Auswertung im Empfänger (3) reicht es aus, wenn lediglich ein Frequenzpaar fehlerfrei empfangen wird.

## Beschreibung

Die Erfindung betrifft eine Einrichtung zur Datenübertragung über das Stromversorgungsnetz, mit zumindest einem Sender, einem Empfänger und einer an das Stromversorgungsnetz angeschlossenen Ein- und Auskopplung für den Sender und den Empfänger.

Die am meisten verwendete Übertragungsart auf dem Stromversorgungsnetz erfolgt mittels einer Trägerfrequenz im Frequenzbereich um 100 kHz, häufig 120 kHz. Die Modulation ist AM (Amplitude Modulation) oder FSK (Frequency Shift Keying). Das als Datenkanal dienende Stromversorgungsnetz ist zur Übertragung eines 50 Hz Sinussignals und nicht zur Datenübertragung bei höheren Frequenzen eingerichtet. Die Signaldämpfung und der Störpegel werden durch die Netztopologie und durch die Lasten bestimmt. Aufgrund von Reflexionen können gewisse Frequenzen stark gedämpft werden. Die Impedanz des Stromversorgungsnetzes unterliegt bei hohen Frequenzen starken Schwankungen. Da sowohl die Lasten als auch die Netztopologie variieren, sind Dämpfung und Störpegel nicht nur frequenz- und ortsabhängig, sondern auch zeitabhängig und damit nicht voraussagbar. Aus diesem Grunde ist es leicht einzusehen, daß ein schmalbandiges Übertragungssystem mit nur einer Trägerfrequenz die Anforderungen einer hohen Verfügbarkeit nicht zu erfüllen vermag. Außerdem ist eine Trägerfrequenz leicht durch Manipulation bei z. B. Sicherheitssystemen störbar.

Der Erfindung liegt die Aufgabe zugrunde, eine Einrichtung zu einem Sender-Empfängerkonzept zu schaffen, welche eine einwandfreie Datenübertragung über das Stromversorgungsnetz gewährleistet.

Diese Aufgabe löst die Erfindung bei, einer gattungsgemäßen Einrichtung dadurch, daß der Sender mit einem Microcomputer und mit einer dem Microcomputer nachgeschalteten PLL(Phase-Locked-Loop)-Schaltung zur Frequenzaufbereitung ausgerüstet ist, und daß die PLL-Schaltung und der Microcomputer über eine Endverstärkungsstufe unter Zwischenschaltung der Ein/Auskoppeleinrichtung an das Stromversorgungsnetz angeschlossen sind. An den Microcomputer sind der Empfänger und zweckmäßigerweise ein Input/Output-Modul (Tasten, Lampen, Relais usw.) angeschlossen. Bei dem Microcomputer kann es sich um eine digitale Rechen- und Steuereinheit wie z. B. einen Microprozessor, Microcontroller, eine Digitalschaltung oder um ein anderes Computersystem handeln. Weiter sieht die Erfindung vor, daß der Empfänger einen Frequenzmischer zur Frequenzumsetzung, einen Bandpaß, einen Begrenzer und einen an den Microcomputer angeschlossenen Demodulator, z. B. FSK (Frequency Shift Keying)-Demodulator aufweist, wobei die PLL-Schaltung an den Modulator und den Demodulator angeschlossen sind.

Die Frequenzen für den Sender und Empfänger werden also von einer PLL-Schaltung aufbereitet. Diese Frequenzen werden von einem für den Microcomputer ohnehin notwendigen Schwingquarz abgeleitet. Die Einstellung der jeweiligen Frequenz erfolgt von dem Microcomputer aus durch z. B. einen 8 Bit programmierbaren Teiler. Die Senderfrequenzen können im Bereich von 70 kHz bis 160 kHz gewählt werden. Gemäß VDE0808 steht der Frequenzbereich von 95 kHz bis 148,5 kHz für die Signalübertragung auf dem Stromversorgungsnetz zur Verfügung. Bedingt durch den gewählten Schwingquarz und der PLL-Schaltung ist eine Auswahl der Frequenzen im Raster von 900 Hz möglich. Die Übertragung der digitalen Daten erfolgt mittels Frequenzumtastung, eben FSK. Die zu übertragenden Nullen und Einsen des Datenstromes werden in die beiden Frequenzen fL und fH umgesetzt. Der Datenakt kann 300 Bit/s betragen. Der Abstand zwischen fL und fH ist konstant und beträgt 4,5 kHz.

Im Rahmen der Erfindung ist von besonderer Bedeutung, daß bei dem gewählten Sender-Empfängerkonzept jedes Datentelegramm nacheinander in drei oder mehreren Frequenzbereichen, möglichst weit auseinanderliegenden Frequenzbereichen, gesendet wird. Für die Auswertung im Empfänger reicht es aus, wenn nur ein Frequenzpaar fehlerfrei empfangen wird. In jedem Fall werden dadurch Störungen selbst im Wege der Manipulation ausgeschaltet.

Nach einem weiteren Vorschlag der Erfindung, dem selbständige Bedeutung zukommt, ist vorgesehen, daß die PLL-Schaltung zumindest einen ersten Frequenzteiler zum Erzeugen einer Referenzfrequenz, einen Tiefpaß und einen Oszillator, z. B. VCO (Voltage Controlled Oszillator), zur Erzeugung einer FSK-modulierten Sendefrequenz aufweist. Vorzugsweise ist im Anschluß an den VCO ein zweiter Frequenzteiler zur Erhöhung der Modulationsgeschwindigkeit bzw. der Datenrate vorgesehen. Weiter empfiehlt die Erfindung, daß die PLL-Schaltung einen programmierbaren Frequenzteiler aufweist, der dem VCO nachgeschaltet und an einen dem VCO bzw. Tiefpaß vorgeschalteten Phasenvergleicher angeschlossen ist. Im übrigen ist der erste Frequenzteiler über einen Schwingquarz und der programmierbare Frequenzteiler über mehrere Steuerleitungen an den Microcomputer angeschlossen.

Die FSK-Modulation wird fast ausschließlich bei binärer Übertragung von Daten verwendet. Die Kennzustände werden bei dieser Modulationsart durch zwei unterschiedliche Frequenzen dargestellt, zwischen denen meist hart umgetastet wird, damit die Modulationsschaltung einfach wird. Eine Ausführungsform ist die beanspruchte Schaltung ohne den zweiten Frequenzteiler. Die Sendefrequenz kann in diesem Fall im Raster der Referenzfrequenz verändert werden. Die FSK-Modulation erfolgt durch Addition des Modulationssignals am Eingang (RS) des VCO's. Hierbei ist jedoch der Hub zwischen den Eckfrequenzen von der Kennlinie (Steilheit) des VCO's abhängig, die oft auch temperaturabhängig ist. Weiterhin kann durch Veränderung des Teilerfaktors des programmierbaren Frequenzteilers (z. B. durch einen Microprozessor) eine FSK-Modulation erzeugt werden, wobei der Hub ein Vielfaches der Referenzfrequenz ist. In der PLL-Schaltung ohne den zweiten Frequenzteiler ist die Modulationsgeschwindigkeit durch den notwendigen Tiefpaß, gebildet durch R1, R2 und C stark begrenzt. Die Modulationsgeschwindigkeit bzw. Datenrate kann jedoch durch Hinzufügen des zweiten Frequenzteilers und die um den Teilerfaktor erhöhte VCO-Frequenz und Referenzfrequenz verbessert werden, weil dann auch die Tiefpaßfrequenz des Tiefpasses R1, R2 und C erhöht werden kann. Durch diese Maßnahmen können sämtliche Parameter wie Stabilität der VCO-Frequenz, der Modulationshub, die Datenrate und die Taktfrequenz für einen eventuellen Microprozessor von einem Schwingquarz abgeleitet werden.

Die erfindungsgemäße Einrichtung zur Datenübertragung über das Stromversorgungsnetz eröffnet u. a. folgende Anwendungsmöglichkeit:
- Alarmsystem Über Bewegungsfelder, Rauchsensoren, Erschütterungsmelder, Glasbruchmelder, akustische Sensoren, Näherungsmelder, Berührungsmelder werden Bereiche, Räume, Dinge oder Zustände überwacht. Die entsprechende Alarmweitergabe oder Information der Zustandsänderung wird nach dem vorbeschriebenen Prinzip zu einer oder mehreren Zentralen übertragen und entsprechend angezeigt oder weiterverarbeitet.

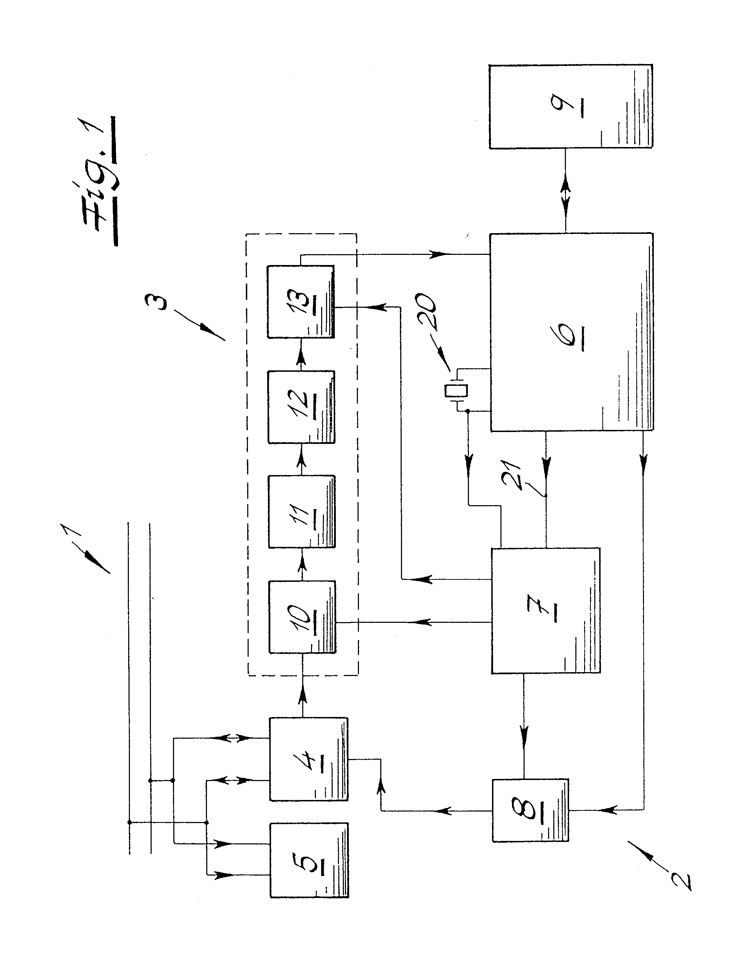

Im folgenden wird die Erfindung anhand einer lediglich ein Ausführungsbeispiel darstellenden Zeichnung näher erläutert; es zeigen
Fig. 1 ein Blockschaltbild der erfindungsgemäßen Einrichtung und

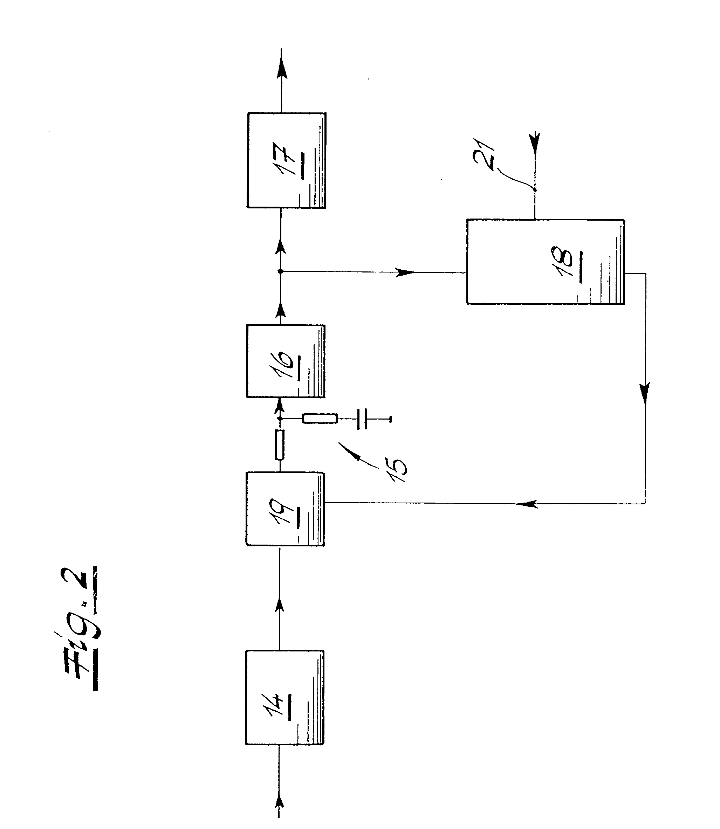

Fig. 2 ein Blockschaltbild der PLL-Schaltung.

In den Figuren ist eine Einrichtung zur Datenübertragung über das Stromversorgungsnetz 1 dargestellt, die in ihrem grundsätzlichen Aufbau einen Sender 2, einen Empfänger 3 und eine an das Stromversorgungsnetz 1 angeschlossene Ein- und Auskoppeleinrichtung 4 für den Sender 2 und den Empfänger 3 aufweist. Außerdem ist eine an das Stromversorgungsnetz 1 angeschlossene Stromversorgung 5 für die gesamte Einrichtung vorgesehen. Der Sender 2 ist mit einem Microcomputer 6 und mit einer dem Microcomputer 6 nachgeschalteten PLL-Schaltung 7 zur Frequenzaufbereitung ausgerüstet. Die PLL-Schaltung 7 und der Microcomputer 6 sind über eine Endverstärkungsstufe 8 unter Zwischenschaltung der Ein/Auskoppeleinrichtung 4 an das Stromversorgungsnetz 1 angeschlossen. An den Microcomputer 6 sind der Empfänger 3 und ein Input/Output-Modul 9 (Tasten, Lampen, Relais usw.) angeschlossen. Der Empfänger 3 weist einen Frequenzmischer 10 zur Frequenzumsetzung, einen Bandpaß 11, einen Begrenzer 12 und einen an den Mischcomputer 6 angeschlossenen Demodulator, nach dem Ausführungsbeispiel FSK-Demodulator 13, auf, wobei die PLL-Schaltung 7 an den Modulator 10 und an den Demodulator 13 angeschlossen ist. Die PLL-Schaltung 7 weist einen ersten Frequenzteiler 14 zum Erzeugen einer Referenzfrequenz, einen Tiefpaß 15 und einen Oszillator, nach dem Ausführungsbeispiel einen VCO 16 zur Erzeugung einer FSK-modulierten Sendefrequenz auf. Im Anschluß an den VCO 16 ist ein zweiter Frequenzteiler 17 zur Erhöhung der Modulationsgeschwindigkeit bzw. der Datenrate vorgesehen. Die PLL-Schaltung 7 besitzt ferner einen programmierbaren Frequenzteiler 18, der dem VCO 16 nachgeschaltet und an einen dem VCO 16 bzw. Tiefpaß 15 vorgeschalteten Phasenvergleicher 19 angeschlossen ist.

Der erste Frequenzteiler 14 ist über einen Schwingquarz 20 und der programmierbare Frequenzteiler 18 über mehrere Steuerleitungen 21 an den Microcomputer 6 angeschlossen.

## Patentansprüche

1. Einrichtung zur Datenübertragung über das Stromversorgungsnetz, mit einem Sender, einem Empfänger und einer an das Stromversorgungsnetz angeschlossenen Ein/Auskoppeleinrichtung für den Sender und den Empfänger, dadurch gekennzeichnet, daß der Sender (2) mit einem Microcomputer (6) und mit einer dem Microcomputer (6) nachgeschalteten PLL-Schaltung (7) zur Frequenzaufbereitung ausgerüstet ist, und daß die PLL-Schaltung (7) und der Microcomputer (6) über eine Endverstärkerstufe (8) unter Zwischenschaltung der Ein/Auskoppeleinrichtung (4) an das Stromversorgungsnetz (1) angeschlossen sind und Datentelegramme in mehr als einem Frequenzbereich übertragen.

2. Einrichtung nach Anspruch 1, dadurch gekennzeichnet, daß an den Microcomputer (6) der Empfänger (3) und ein Input/Output-Modul (9) angeschlossen sind.

3. Einrichtung nach Anspruch 1 oder 2, dadurch gekennzeichnet, daß der Empfänger (3) einen Frequenzmischer bzw. einen Modulator (10) zur Frequenzumsetzung, einen Bandpaß (11) bzw. Filter, einen Limiter (12) und einen an den Microcomputer (6) angeschlossenen Demodulator (13), z. B. FSK-Demodulator aufweist, wobei die PLL-Schaltung (7) an den Modulator (10) und den Demodulator (13) angeschlossen ist.

4. Einrichtung nach einem der Ansprüche 1 bis 3, dadurch gekennzeichnet, daß die PLL-Schaltung (7) zumindest einen ersten Frequenzteiler (14) zum Erzeugen einer Referenzfrequenz, einen Tiefpaß (15) und einen Oszillator, z. B. VCO (16) zur Erzeugung einer FSK-modulierten Sendefrequenz aufweist.

5. Einrichtung nach einem der Ansprüche 1 bis 4, dadurch gekennzeichnet, daß im Anschluß an den VCO (16) ein zweiter Frequenzteiler (17) zur Erhöhung der Modulationsgeschwindigkeit bzw. der Datenrate vorgesehen ist.

6. Einrichtung nach einem der Ansprüche 1 bis 5, dadurch gekennzeichnet, daß die PLL-Schaltung (7) einen programmierbaren Frequenzteiler (18) aufweist, der dem VCO (16) nachgeschaltet und an einem dem VCO (16) bzw. Tiefpaß (15) vorgeschalteten Phasenvergleicher (19) angeschlossen ist.

7. Einrichtung nach einem der Ansprüche 1 bis 6, dadurch gekennzeichnet, daß der erste Frequenzteiler (14) über einen Schwingquarz (20) und der programmierbare Frequenzteiler (18) über mehrere Steuerleitungen (21) an den Microcomputer (6) angeschlossen sind.
